# EUROPÄISCHE PATENTANMELDUNG

(11) **EP 2 308 626 A1**
(43) Veröffentlichungstag der Anmeldung: **13.04.2011**
(21) Anmeldenummer: 10013247.1
(22) Anmeldetag: 02.10.2010
(51) Int. Cl.: B23F 1/02, B23F 23/12, B23Q 1/48, B23Q 39/02

(54) **Verzahnungsschleifmaschine**

(30) Priorität: 06.10.2009 DE 102009048416
(71) Anmelder: Höfler Maschinenbau GmbH, 76275 Ettlingen (DE)
(72) Erfinder: Geiser, Hansjörg, Dr.-Ing., 76571 Gaggenau (DE); Bister, Gerd, 78727 Oberndorf (DE); Bucksch, Felix, 76316 Malsch (DE)
(74) Vertreter: Thämer, Wolfgang

(57) **Zusammenfassung**

Die Erfindung betrifft eine Verzahnungsschleifmaschine für Außenverzahnungen mit einem drehbaren Werkstücktisch und mit mindestens zwei Werkzeugständern, wobei jeder Werkzeugständer in radialer Richtung zur Werkstücktischachse verfahrbar ist, wobei an jedem Werkzeugständer eine zumindest annähernd parallel zur Werkstücktischachse höhenverstellbare, der Werkstücktischachse zugewandte Werkzeugeinheit angeordnet ist und wobei jede Werkzeugeinheit einen um eine Schwenkachse schwenkbaren Schwenkkopf umfasst. Jede Werkzeugeinheit umfasst einen Axialschlitten, der in einer Richtung zumindest annähernd normal zur Schwenkachse verfahrbar ist.

Mit der vorliegenden Erfindung wird eine Verzahnungsschleifmaschine für Außenverzahnungen entwickelt, die eine geringe Boden-zu-Boden-Zeit des Werkstücks ermöglicht.

## Beschreibung

Die Erfindung betrifft eine Verzahnungsschleifmaschine für Außenverzahnungen mit einem drehbaren Werkstücktisch und mit mindestens zwei Werkzeugständern, wobei jeder Werkzeugständer in radialer Richtung zur Werkstücktischachse verfahrbar ist, wobei an jedem Werkzeugständer eine zumindest annähernd parallel zur Werkstücktischachse höhenverstellbare, der Werkstücktischachse zugewandte Werkzeugeinheit angeordnet ist und wobei jede Werkzeugeinheit einen um eine Schwenkachse schwenkbaren Schwenkkopf umfasst.

Aus der CH 688 614 A5 ist eine derartige Maschine bekannt. Sie hat zwei auf Drehtischen angeordnete, linear verfahrbare Werkzeugständer. Der zwischen den Zustellrichtungen der Werkzeugständer eingeschlossene Winkel ist in Abhängigkeit des Werkstücks einzustellen. Hierfür sind die Drehtische mit den Werkzeugständern sehr zeitaufwendig rotatorisch um die Werktischachse zu verstellen. Die Teilungsgenauigkeit des Werkstücks ist im Wesentlichen von der Einstellpräzision der Drehtische mit den darauf verfahrbaren Werkzeugständern abhängig. Ist ein Nachstellen erforderlich, ist die Bearbeitung des Werkstücks zu unterbrechen und der Winkel neu einzustellen. Diese Einrichtvorgänge beeinflussen die Qualität und die Nebenzeit und damit die Boden-zu-Boden-Zeit des Werkstücks.

Der vorliegenden Erfindung liegt daher die Problemstellung zugrunde, eine Verzahnungsschleifmaschine zu entwickeln, die zum einen eine geringe Boden-zu-Boden-Zeit des Werkstücks ermöglicht, zum anderen die Qualität des Werkstücks mit geringem technischen Aufwand zuverlässig sicherstellt.

Diese Problemstellung wird mit den Merkmalen des Hauptanspruches gelöst. Dazu umfasst jede Werkzeugeinheit einen Axialschlitten, der in einer Richtung zumindest annähernd normal zur Schwenkachse verfahrbar ist.

Weitere Einzelheiten der Erfindung ergeben sich aus den Unteransprüchen und der nachfolgenden Beschreibung schematisch dargestellter Ausführungsformen.
- Figur 1:: Verzahnungsschleifmaschine;
- Figur 2:: Seitenansicht der Verzahnungsschleifmaschine aus Figur 1;
- Figur 3:: Detail des Arbeitsraums;
- Figur 4:: Detail eines Arbeitsraums mit Profilschleifscheibe;
- Figur 5:: Verzahnungsschleifmaschine mit einem Werkstück mit zwei Verzahnungen.

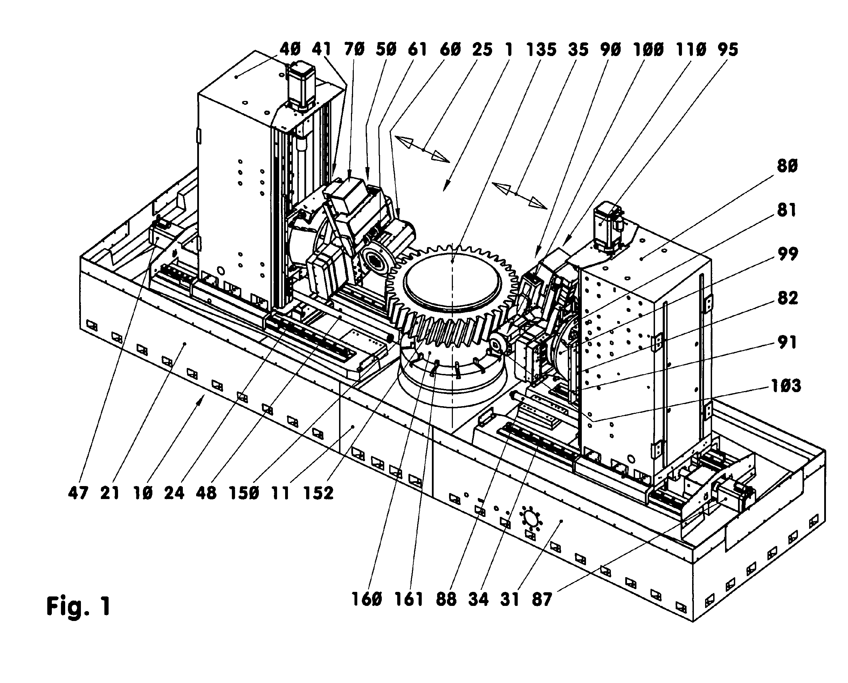

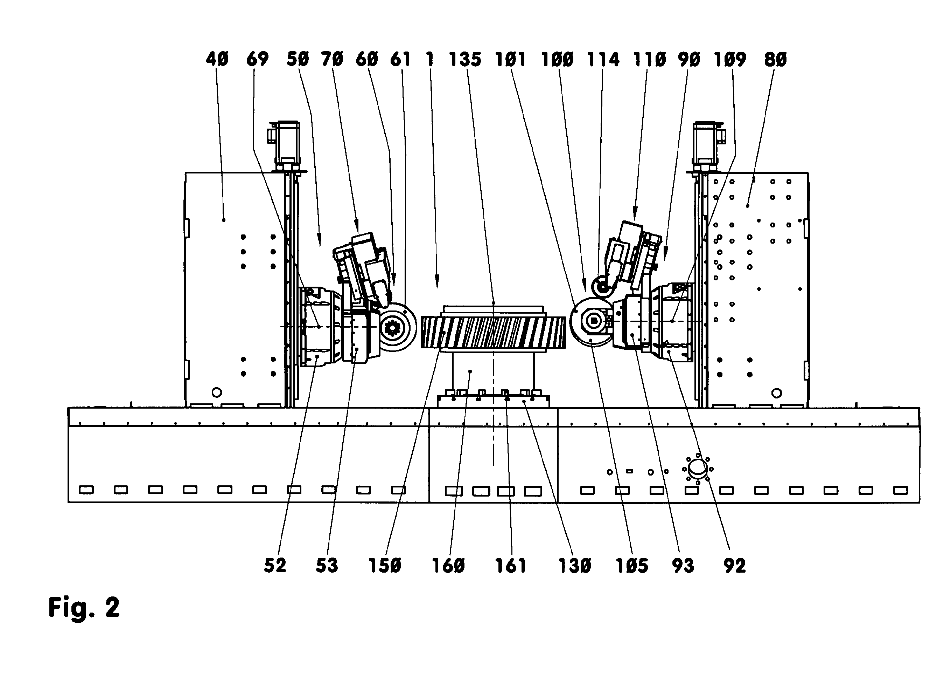

Die Figuren 1 und 2 zeigen eine Verzahnungsschleifmaschine (1). Die Verzahnungsschleifmaschine (1) umfasst ein Maschinenbett (10), auf dem zwei linear verfahrbare Werkzeugständer (40, 80) und ein zentraler, drehbarer Werkstücktisch (130) angeordnet sind. Auf dem Werkstücktisch (130) ist in den Darstellungen der Figuren 1 und 2 ein Werkstück (150), z.B. ein schrägverzahntes Stirnrad (150) mittels einer Werkstück-Spannvorrichtung (160) aufgespannt.

Die Verzahnungsschleifmaschine (1) hat im Ausführungsbeispiel ein dreiteiliges Maschinenbett (10). Ein Bettteil (21) trägt z.B. den einen Werkzeugständer (40), das andere Bettteil (31) den anderen Werkzeugständer (80). Das dritte Bettteil (11), das in den Darstellungen der Figuren 1 und 2 zwischen den beiden Werkzeugträgerbetten (21, 31) angeordnet ist, trägt den Werkstücktisch (130). Die Werkzeugmaschine (1) kann jedoch auch ein alle Komponenten tragendes Maschinenbett (10) aufweisen. Im dargestellten Ausführungsbeispiel sind beide Werkzeugständer (40, 80) und der Drehtisch (130) in einer Linie angeordnet. Die beiden Werkzeugträgerbetten (21, 31) können aber auch so angeordnet sein, dass die Verfahrrichtungen (25, 35) der Werkzeugständer (40, 80) einen Winkel ungleich 180 Grad einschließen. Die Bettteile (21, 11, 31) des Maschinenbetts (10) sind im Ausführungsbeispiel aus einem Polymerbeton hergestellt.

Der Werkstücktisch (130) ist auf dem Bettteil (11) drehbar ohne Anschlag gelagert. Seine Werkstücktischachse (135) ist normal zu der Aufstellebene der Verzahnungsschleifmaschine (1) ausgerichtet. In der Darstellung der Figuren 1 und 2 durchdringt die Werkstücktischachse (135) den Werkstücktisch (130) zentral und steht senkrecht im Raum. Der Antrieb des Drehtisches (130) erfolgt beispielsweise mittels eines Drehmomentmotors, eines sogenannten Torquemotors, der den Tisch (130) direkt und ohne Umkehrspiel antreibt. Die Teilungsgenauigkeit wird mittels eines direkten Meßsystems sichergestellt. Der Antrieb des Werkstücktisches (130) ist beispielsweise im Maschinenbett (10) integriert.

Der kreisförmige Drehtisch (130) hat z.B. eine zentrale Einsenkung und beispielsweise radial angeordnete T-Nuten (132). In diesen T-Nuten (132) sind z.B. Werkstückhalter (161) eingesetzt.

Das Werkstück (150) kann eine oder mehrere, in Achsrichtung zueinander versetzte Verzahnungen aufweisen. Die Teilkreise und Moduln dieser Verzahnungen können unterschiedlich sein.

Das in den Figuren 1 und 2 dargestellte Werkstück (150) hat eine Außenschrägverzahnung (152). Es hat z.B. eine zentrale Bohrung, durch die eine auf dem Werkstücktisch (130) aufgespannte Werkstückspannvorrichtung (160) hindurchgreift. Das Werkstück (150) kann auch Wellenansätze, z.B. mit Lagersitzen haben. Ein derartiges Werkstück wird dann beispielsweise mit Werkstückhaltern auf dem Drehtisch (130) aufgespannt. Der Schrägungswinkel der dargestellten Schrägverzahnung (152) beträgt z.B. 16 Grad. Das Zahnrad (150) kann auch eine Gradverzahnung mit einem Schrägungswinkel von Null Grad oder eine Schrägverzahnung mit einem Schrägungswinkel aufweisen. Das Werkstück kann auch eine Schnecke mit einem Steigungswinkel von bis zu 90 Grad sein.

Die Werkzeugträgerbetten (21, 31) haben jeweils Führungsschienen (24, 34), die im Ausführungsbeispiel symmetrisch zur gedachten vertikalen Mittenlängsebene des Maschinenbetts (10) angeordnet sind. Die mittels der Führungsschienen (24, 34) gebildeten Linearführungssysteme sind beispielsweise Wälzführungssysteme z.B. in der Bauart von Schwalbenschwanzführungen. Die Führungsschienen (24, 34) haben einen zumindest annähernd Doppel-T-förmigen Querschnitt. Beim Betrieb der Werkzeugmaschine (1) können die Führungsschienen (24, 34) mittels Schutzabdeckungen geschützt sein.

Die Führungssysteme können auch mit Flachführungen, Prismenführungen, Rundführungen und/oder Kombinationen hieraus ausgebildet sein. Mindestens eine Führung kann einen Untergriff aufweisen.

Das in der Darstellung der Figur 1 links dargestellte Werkzeugträgerbett (21) trägt den Werkzeugständer (40), der entlang der Führungsschienen (24) mittels eines Antriebssystems (47, 48) in den Verfahrensrichtungen (25) linear verfahrbar ist.

Das zum Werkzeugträgerbett (21) z.B. identische Werkzeugträgerbett (31) trägt den Werkzeugständer (80). Letzterer ist auf den Führungsschienen (34) mittels eines Antriebssystems (87, 88) in den Verfahrensrichtungen (35) linear verfahrbar.

Beide Werkzeugständer (40; 80) sind im Ausführungsbeispiel einander identisch. An jedem der Werkzeugständer (40, 80) ist eine Werkzeugeinheit (50, 90) angeordnet. Die beiden Werkzeugeinheiten (50, 90) mit den Werkzeugen (61, 101) zeigen zueinander. Hierbei ist die erste Werkzeugeinheit (50) am ersten, in den Figuren 1 und 2 links dargestellten Werkzeugständer (40) in einer Linearführung (41) gelagert. Die beispielsweise zur ersten Werkzeugeinheit (50) identisch aufgebaute zweite Werkzeugeinheit (90) ist am zweiten Werkzeugständer (80) in einer Linearführung (81) gelagert. Diese Linearführungen (41, 81) sind zumindest annähernd parallel zur Werkstücktischachse (135) ausgerichtet. Annähernd parallel bedeutet hier, dass die Hubrichtung und die Werkstücktischachse (135) einen Winkel von bis zu zehn Grad einschließen können. Dieser Winkel kann auch kleiner als fünf Grad oder kleiner als ein Grad sein. Beide Linearführungen (41, 81) umfassen an den Werkzeugständern (40, 80) angeordnete Führungsschienen (42, 82).

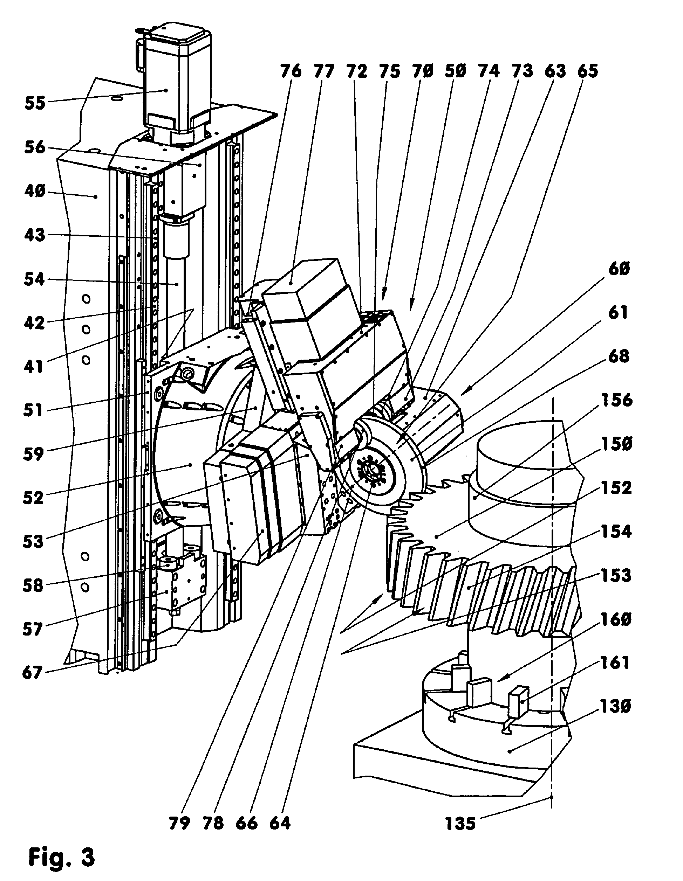

Die einzelne Werkzeugeinheit (50; 90), vgl. auch Figur 3, umfasst einen Hubschlitten (51; 91), einen Schwenkkopf (52; 92), einen Axialschlitten (53; 93), eine Arbeitseinheit (60, 100) mit dem Werkzeug (61, 101) und eine Abrichteinheit (70, 110).

Die Figur 3 zeigt einen Ausschnitt des Arbeitsraums einer Verzahnungsschleifmaschine (1). Das Werkstück (150) hat Wellenansätze (156). Der einzelne Hubschlitten (51; 91) ist mittels einer Antriebseinheit (54 - 57; 95), entlang der Führungsschienen (42; 82) bewegbar. Hierfür weist der einzelne Hubschlitten (51; 91) als Führungselemente z.B. Rollenumlaufsysteme auf.

Am Hubschlitten (51; 91) ist der Schwenkkopf (52; 92) befestigt. Der einzelne Schwenkkopf (52; 92) umfasst eine Schwenkeinheit (59, 99), die beispielsweise mittels eines Drehmomentmotors, z.B. eines Synchronmotors in der Bauart eines Torquemotors, direkt innerhalb eines Schwenkbereichs schwenkbar ist. Die Schwenkachse (69, 109), vgl. Figur 2, ist normal zu der durch die durch die Führungsflächen (43) aufgespannten Ebene und beispielsweise normal zur Werkstücktischachse (135) ausgerichtet. Die Schwenkwinkel beider Schwenkköpfe (52; 92) können unterschiedlich sein. Die einzelne Schwenkeinheit (59; 99) ist beispielsweise um bis zu 90 Grad aus ihrer Normallage, in der das Werkzeug (61, 101) eine waagerechte Drehachse (66) hat, schwenkbar.

Jede Schwenkeinheit (59, 99) trägt einen Axialschlitten (53, 93). Dies ist ein entlang einer Linearführung verfahrbarer Schlitten. Seine Verfahrrichtung ist im Ausführungsbeispiel normal zur Schwenkachse (69, 109). Die Verfahrrichtung kann aber mit einer Normalen zur Schwenkachse (69, 109) einen Winkel von bis zu zehn Grad einschließen. Der genannte Winkel kann auch kleiner als fünf Grad oder kleiner als ein Grad sein. Im Ausführungsbeispiel sind die auf der Schwenkeinheit (59; 99) angeordneten Führungsschienen der Linearführung mit teleskopartigen Schutzabdeckungen (67) geschützt. Der Axialschlitten (53, 93) ist beispielsweise mittels eines im Schwenkkopf (52, 92) angeordneten Vorschubantriebs antreibbar. Der Vorschubantrieb umfasst z.B. einen frequenzgeregelten Drehstrommotor, der eine Gewindespindel antreibt. Die Hübe der beiden Axialschlitten (53, 93) können unterschiedlich sein.

Der einzelne Schwenkkopf (52; 92) kann auch auf dem jeweiligen Axialschlitten (53; 93) angeordnet sein. Der Axialschlitten (53; 93) und der zugehörige Hubschlitten (51; 91) können dann als Kreuzschlitten ausgebildet sein.

Im Ausführungsbeispiel sind beide Schwenkscheiben (59, 99) und damit die Axialschlitten (53, 93) beispielsweise um den Schrägungswinkel der zu bearbeitenden Verzahnung geschwenkt. Bei der Bearbeitung einer Gradverzahnung ist der Axialschlitten (53, 93) z.B. in einer Richtung parallel zu der durch die Führungsflächen (43) aufgespannten Ebene verfahrbar. Diese Hubrichtung ist auch zumindest annähernd parallel zur Maschi-, nenaufstandsbene.

Auf dem einzelnen Axialschlitten (53; 93) ist die Arbeitseinheit (60; 100), z.B. eine Schleifeinheit (60; 100) angeordnet.

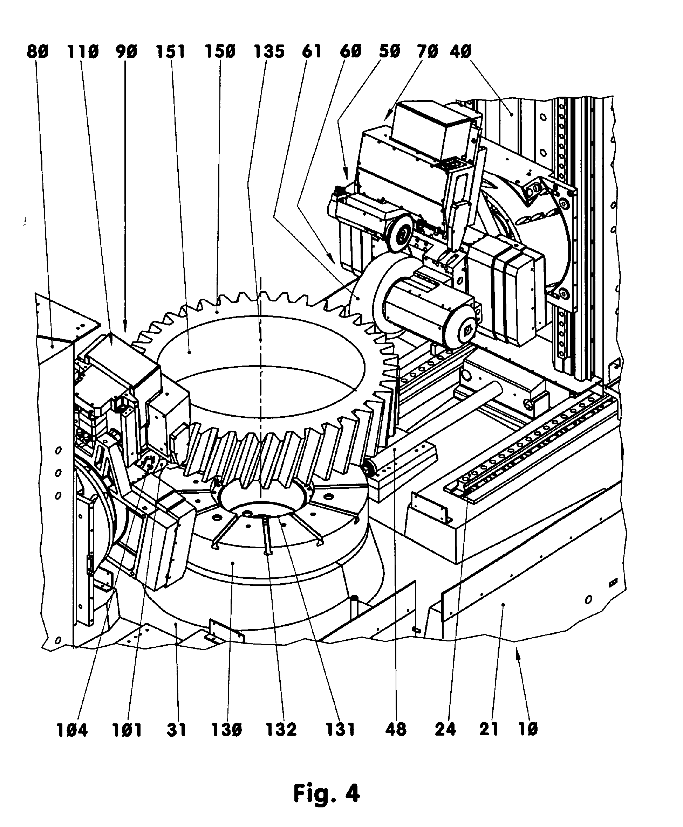

Die an der jeweiligen Schleifspindel (64; 104), vgl. auch Figur 4, befestigte Schleifscheibe (61; 101) ist im Ausführungsbeispiel eine Profilschleifscheibe. Dieses vielschneidige Werkzeug (61; 101) hat auf beiden Scheibenflanken Arbeitsflächen (65; 105). Auch die Umfangsfläche (68) kann als Arbeitsfläche ausgebildet sein. Die Werkzeugmaschine kann aber auch mit einer Einflankenscheibe mit nur einer Arbeitsfläche (65; 105) ausgerüstet sein.

Die Schleifspindeln (64; 104) und/oder die Schleifscheiben (61; 101) an den beiden Werkzeugständern (40, 80) können unterschiedlich sein. Beispielsweise kann eine Scheibe eine Schlicht- und die andere eine Schruppscheibe sein.

Beim Einsatz unterschiedlicher Schleifspindeln (64; 104) können diese z.B. unterschiedlich profilierte Schleifscheiben (61; 101) aufnehmen. Auch kann eine Schleifspindel (64; 104) oder es können beide Schleifspindeln (64, 104) zur Aufnahme von schnecken- oder gewindeförmig profilierten Schleifscheiben zum kontinuierlichen Wälzschleifen ausgebildet sein.

Oberhalb der Schleifeinheit (60; 100) ist auf der einzelnen Schwenkscheibe (59; 99) eine Abrichteinheit (70; 110) angeordnet. Beide Abrichteinheiten (70, 110) sind beispielsweise identisch aufgebaut. Es wird daher im Folgenden nur die in der Darstellung der Figur 3 gezeigte Abrichteinheit (70) einer Profilschleifmaschine beschrieben.

Die Abrichteinheit (70) umfasst einen Abrichtschlitten (72), auf dem zwei Abrichtmotoren (73, 79) mit Abrichtspindeln (75) und Abrichtrollen (74, 78) angeordnet sind.

Der Abrichtschlitten (72) ist mittels eines Vorschubantriebs linear verfahrbar. Der Vorschubmotor (76) ist beispielsweise auf der Unterseite des Abrichtschlittens (72) angeordnet und treibt z.B. mittels eines unter einer Schutzabdeckung (77) angeordneten Zahnriemens eine Vorschubgewindespindel an. Die Vorschubgewindespindel ist in einer Gewindehülse des Abrichtschlittens (72) geführt. Ein Drehen der Vorschubgewindespindel hebt oder senkt den Abrichtschlitten (72).

Die Abrichtmotoren (73, 79) können direkt oder mittels eines Getriebes die jeweilige Abrichtspindel (75) und die von ihr aufgenommene Abrichtrolle (74, 78), das sind z.B. Diamantrollen, antreiben. Die Abrichtwerkzeuge (74, 78, 114) können auch Abrichtscheiben sein.

Die Drehachsen der beiden Abrichtrollen (74, 78) fluchten miteinander. Die Verbindungsgerade ist parallel zur Drehachse (66) der Schleifspindel (64), so dass die beiden Geraden eine Ebene aufspannen. Bei der Zustellung der Abrichteinheit (70) mittels des Abrichtschlittens (72) bewegt sich die Verbindungsgerade in der aufgespannten Ebene, also radial zur Drehachse der Schleifspindel (64).

Es ist auch denkbar, eine Abrichteinheit (70; 110) mit nur einem Abrichtwerkzeug (74; 78; 114). Um beide Werkzeugflanken des Schleifwerkzeugs (61, 101) zu bearbeiten, verfährt die Abrichteiheit (70) beispielsweise oberhalb der Schleifscheibe (61; 101). Die Zustellung des Abrichtwerkzeugs (74; 78; 114) erfolgt dann mittels des Abrichtschlittens (72).

Die Abrichteinheit (70; 110) kann auch auf dem jeweiligen Axialschlitten (53; 93) angeordnet sein. Beispielsweise kann die Abrichteinheit (70; 110) dann einen Kreuzschlitten umfassen. Hiermit können die beiden Flanken der Schleifscheibe (61; 101) einzeln abgerichtet werden. Auch eine Anordnung der Abrichteinheit (70; 110) am Hubschlitten (51; 91) oder am Werkzeugständer (40; 80) ist denkbar.

Ebenso kann die Abrichteinheit (70) zusätzlich eine oder mehrere Schwenkachsen aufweisen. Die Abrichteinheit (70) hat damit zusätzliche Freiheitsgrade, um beispielsweise komplizierte Werkzeuggeometrien oder schneckenförmige Werkzeuge zu bearbeiten.

Zur Bearbeitung des in den Figuren 1 bis 3 dargestellten Werkstücks (150) ist dieses auf den Werkstücktisch (130) aufgespannt. Die beiden Schwenkköpfe (52, 92) sind zumindest annähernd auf den Schrägungswinkel der Verzahnung (152) eingestellt. Die zur Bearbeitung bestimmten Flanken (65) beider Schleifscheiben (61; 101) sind z.B. mit dem Gegenprofil der zu bearbeitenden Zahnlücke (153) abgerichtet.

Nach dem Einschalten der Schleifspindel (64) erfolgt die radiale Zustellung z.B. durch Verfahren des in der Darstellung der Figur 1 links angeordneten Werkzeugständers (40) mittels des Antriebs (47, 48) in Richtung des Werkstücks (150). Mittels einer Überlagerung der Drehbewegung des Werkstücktisches (130) und der z.B. absenkenden Hubbewegung des Hubschlittens (51) wird das Werkzeug (61) in die Zahnlücke (153) eingefädelt. Gegebenenfalls kann die Position der Schleifscheibe (61) mittels des Axialschlittens (53) und/oder des Schwenkkopfs (52) korrigiert werden.

Nach dem Einschalten des Kühlmittels werden beispielsweise beide eine Zahnlücke (153) begrenzenden Zahnflanken (154) gleichzeitig im diskontinuierlichen Zweiflankenschliff bearbeitet. Hierbei werden außer der Schleifspindel (64) sowohl der Hubschlitten (51) als auch der Werkstücktisch (130) angetrieben. Die Schleifscheibe (61) wandert entlang der Zahnflanken (154) z.B. von oben nach unten. Beim Schleifen einer balligen Verzahnung kann zusätzlich eine Bewegung des Axialschlittens (53), des Schwenkkopfes (52) und/oder des Werkzeugständers (40) überlagert werden. So kann der Schleifabtrag im mittleren Bereich des Zahns geringer sein als in den Randbereichen. Aufgrund des geringen trägen Masse der Schleifeinheit (60) kann der Vorschubantrieb des Axialschlittens (53) eine hohe Dynamik aufweisen.

Gegebenenfalls können während des Schleifens zusätzlich auch angrenzende Bereiche des Werkstücks (150) bearbeitet werden.

Es ist auch denkbar, erst die eine, dann die andere der eine Zahnlücke begrenzenden Zahnflanken zu bearbeiten. Hierbei können beide Zahnflanken nacheinander mittels einer Schleifscheibe (61; 101) bearbeitet werden. Auch ist der Einsatz zweier Werkzeuge (61, 101) denkbar, von denen das eine z.B. die rechte und das andere die linke Flanke bearbeitet.

Nach der Bearbeitung beider Flanken einer Zahnlücke (153) wird der Werkzeugträger (40) zurückgefahren. Der Werkstücktisch (130) wird geschwenkt und die Schleifscheibe (61) wird in die nächste Zahnlücke (153) eingetaucht. Nach diesem Teilungsschritt können beide Flanken der nächsten Zahnlücke (153) bearbeitet werden.

Ist ein Abrichten der Schleifscheibe (61) erforderlich, wird die Schleifscheibe (61) außer Eingriff gebracht, indem der Werkzeugständer (40) in der Darstellung der Figuren 1 - 3 von rechts nach links verfährt. Das Schleifwerkzeug (101) des zweiten Werkzeugständers (80) wird zugestellt und setzt die Bearbeitung des Werkstücks (150) fort. Das erste Werkzeug (61) kann nun abgerichtet werden. Sobald das zweite Werkzeug (101) abgerichtet werden muss, übernimmt das erste Werkzeug (61) die Bearbeitung.

Das Abrichten der ersten Schleifscheibe (61) kann während der Hauptzeit der Werkstückbearbeitung erfolgen, in der die zweite Schleifscheibe (101) im Eingriff mit dem Werkstück (150) ist. Ebenso wird die zweite Schleifscheibe (101) abgerichtet, während die Verzahnung (152) mittels der ersten Schleifscheibe (61) bearbeitet wird. Hiermit geht das für das Abrichten erforderliche Zeitintervall weder in die Nebenzeit noch in die Boden-zu-Boden-Zeit der Werkstückbearbeitung ein.

Eine der Schleifscheiben (61; 101) kann eine Schleifscheibe für die Schruppbearbeitung sein. Sie hat dann beispielsweise eine andere Werkstoffzusammensetzung als die jeweils andere Schleifscheibe (101; 61), die für die Schlichtbearbeitung eingesetzt werden kann. Somit kann das Werkstück (150) in einer Aufspannung komplett und ohne Stillstand für einen Werkzeugaustausch fertigbearbeitet werden.

Die beiden Schleifscheiben (61; 101) können auch zur Bearbeitung unterschiedlicher Verzahnungen einer mehrfach verzahnten Welle eingesetzt werden. Beispielsweise ist auf einer Seite eine große Schleifscheibe (61; 101) zur Bearbeitung einer Leistungsverzahnung angeordnet, während auf der anderen Seite eine kleine Schleifscheibe (101; 61) zur Bearbeitung einer Keilwellenverzahnung angeordnet ist.

Ebenso ist es denkbar, auf der einen Seite eine Schleifscheibe (61; 101) für ein diskontinuierliches Profilschleifverfahren einzusetzen, während auf der anderen Seite eine Schleifschnecke für ein kontinuierliches Wälzschleifverfahren angeordnet ist. Auch der Einsatz von Schleifschnecken an beiden Werkzeugständern (40, 80) ist denkbar.

Somit können unterschiedliche Verzahnungen an einem Werkstück ohne die Boden-zu-Boden-Zeit beeinflussende Rüstvorgänge, z.B. Umspannen, Schleifscheibenwechsel oder Umprofilieren bearbeitet werden.

Es ist auch denkbar, dass beide Werkzeuge (61, 101) gleichzeitig zur Bearbeitung einer Verzahnung eingesetzt werden.

Bei einem Werkstück (150) mit gerader Zähnezahl und einem Versatz der Werkzeugständer (40; 80) um 180 Grad können die z.B. einander gegenüberliegenden Zahnlücken direkt gleichzeitig bearbeitet werden.

Bei einem Werkstück (150) mit ungerader Zähnezahl können beispielsweise durch Drehen des Werkstücktischs (130) und shiften der Werkzeuge (61, 101) mittels der Axialschlitten (53, 93) die z.B. um eine halbe Teilung zueinander versetzt gegenüber liegende Zahnlücken gleichzeitig bearbeitet werden. Für diese Bearbeitung kann beispielsweise ein Werkzeug (61; 101) asymmetrisch profiliert sein.

Der Eingriff der beiden Werkzeuge (61, 101) in das Werkstück (150) kann auch zeitlich versetzt erfolgen.

Das Werkstück kann auch ein schneckenförmiges Werkstück sein. Zur Bearbeitung kann der Schwenkwinkel des Schwenkkopfes (52; 92) beispielsweise in Abhängigkeit der Schneckensteigung eingestellt werden. Bei einer ungleichförmigen Steigung der Schnecke kann die Kopplung zwischen Werkzeugeinheit (50; 90) und Werkstücktisch (130) während der Bearbeitung verändert werden.

Die geometrische Abstimmung beider Werkzeuge (61, 101) zur Erreichung der geforderten Verzahnungsqualität erfolgt einmalig beim Vermessen der Verzahnungsschleifmaschine. Die Maschinensteuerung umfasst CNC-kontrollierte Korrekturmöglichkeiten, die die Werkzeugständer (40, 80), Hubschlitten (51, 91), Axialschlitten (53, 93) und Schwenkköpfe (52, 92) entsprechend dem Ergebnis der Vermessung einstellen.

Die Antriebsmotoren der Verzahnungsschleifmaschine (1) sind z.B. unabhängig voneinander ansteuerbar. So können die Vorschübe, Schwenkbewegungen und Zustellungen jeweils an das zu bearbeitende Werkstück angepasst werden. Die beiden Werkzeugständer (40, 80), die Hub- (51, 91) und Axialschlitten (53, 93) und die Schwenkköpfe (52, 92) sind unabhängig voneinander verfahrbar bzw. verstellbar.

Die Figur 4 zeigt einen Ausschnitt aus einer Verzahnungsschleifmaschine (1) mit zwei Betteilen (21, 31), Der drehbare Werkstücktisch (130), der z.B. eine zentrale Einsenkung (131) aufweist, ist beispielsweise im rechten Maschinenbettteil (21) gelagert.

Das Werkstück (150) ist ein schrägverzahntes Stirnrad (150) mit einer zentralen Bohrung (151), das dem im Ausführungsbeispiel der Figuren 1 und 2 gezeigten Werkstück (150) entspricht. Die Werkstück-Spannvorrichtung ist hier nicht dargestellt.

Die in diesem Ausführungsbeispiel dargestellten Werkzeuge (61, 101) sind Einflanken-Profilschleifscheiben. Beispielsweise sind die Werkzeuge (61, 101) mittels der Axialschlitten (53, 93) so eingestellt, dass mit dem Werkzeug (61) die rechte Zahnflanke und mit dem Werkzeug (101) die linke Zahnflanke bearbeitet wird. Beide Hubschlitten (51, 91) verfahren z.B. beim Schleifen einer Schrägverzahnung entweder von unten nach oben oder von oben nach unten. Die Bearbeitungsphasen der rechten und linken Zahnflanken, die jeweils vom Eingriff der Schleifscheibe (61; 101) bis zum Auslauf der Schleifscheibe (61; 101) dauert, können zeitlich versetzt zueinander sein oder sich überlappen. Beispielsweise erfolgt der nachfolgende Teilvorgang erst, wenn beide Bearbeitungsphasen beendet sind.

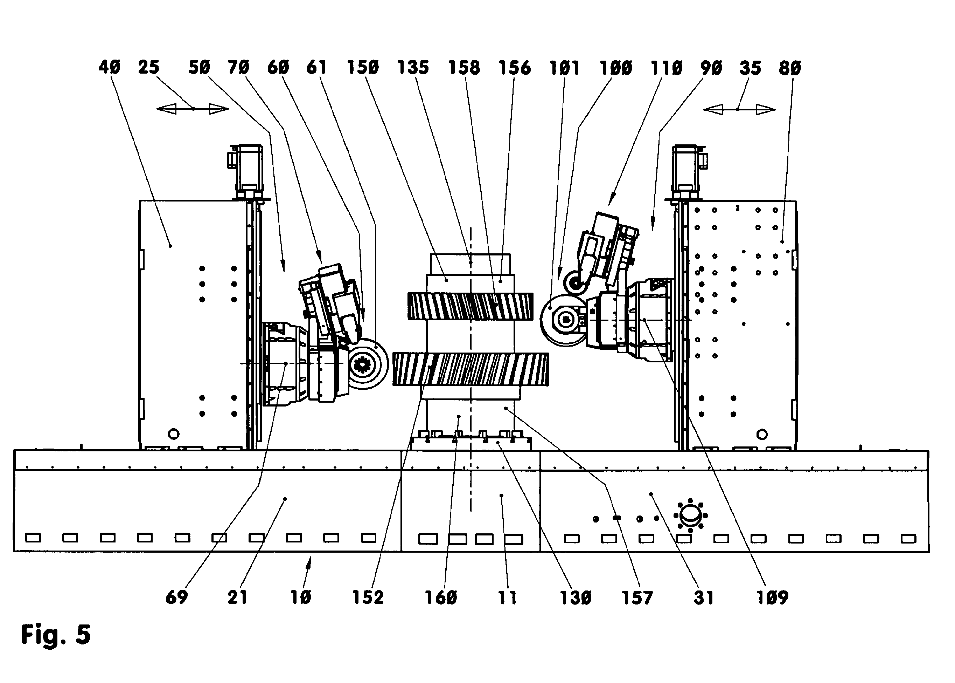

Die Figur 5 zeigt die Bearbeitung eines Werkstücks (150) mit zwei Verzahnungen (152, 158) und Lagersitze (157) umfassenden Wellenansätzen (156). Diese Verzahnungen (152, 158) haben z.B. unterschiedliche Moduln und Teilkreisdurchmesser sowie unterschiedliche Schrägungswinkel. Mittels der linken Werkzeugeinheit (50) wird beispielsweise die untere Verzahnung (152) geschliffen. In der gleichen Aufspannung des Werkstücks (150), ohne einen Austausch von Werkzeugen (61, 101), wird mittels der zweiten Werkzeugeinheit (90) die obere Verzahnung (158) bearbeitet. Hiermit wird eine geringe Boden-zu-Boden-Zeit des Werkstücks (150) erreicht.

Die Verzahnungsschleifmaschine (1) kann auch drei oder mehr Bettteile umfassen, die z.B. sternfömig um den Drehtisch (130) herum angeordnet sind. Hiermit kann dann z.B. ein Großzahnrad ohne Umspannen geschruppt und geschlichtet werden. Beispielsweise verfügt die Maschine für beide Arbeitsvorgänge über redundante Werkzeugeinheiten (50, 90). Das Werkstück (150) kann dann bearbeitet werden, ohne dass ein Öffnen des Arbeitsraums oder ein Umrüsten erforderlich ist.

Es ist auch denkbar, den Arbeitsraum der Verzahnungsschleifmaschine (1) derart abtrennbar zu gestalten, dass ein einzelner Werkzeugständer (40; 80) aus dem kühlmittelbeaufschlagten Arbeitsraum herausgefahren werden kann. Beispielsweise kann während der Bearbeitungszeit des Werkstücks (150) mittels einer Schruppschleifscheibe der in diesem Zeitintervall nicht eingesetzte Werkzeugständer bereits mit einer Schlichtschleifscheibe ausgerüstet werden. Sobald die Schruppbearbeitung dann beendet ist, kann unmittelbar die Schlichtbearbeitung beginnen, währenddessen der zweite Werkstückständer umgerüstet wird.

Auch Kombinationen der einzelnen Ausführungsbeispiele sind denkbar.

### Bezugszeichenliste:

- 1: Verzahnungsschleifmaschine, Werkzeugmaschine

- 10: Maschinenbett
- 11: Bettteil, Werkstücktischbett

- 21: Bettteil, Werkzeugträgerbett
- 24: Führungsschienen
- 25: Verfahrrichtung, Hubrichtung

- 31: Bettteil, Werkzeugträgerbett
- 34: Führungsschienen
- 35: Verfahrrichtung, Hubrichtung

- 40: Werkzeugständer
- 41: Linearführung
- 42: Führungsschienen
- 43: Führungsflächen

- 47: Antriebsmotor, Antriebssystemteil
- 48: Gewindespindel, Antriebssystemteil

- 50: Werkzeugeinheit
- 51: Hubschlitten
- 52: Schwenkkopf
- 53: Axialschlitten
- 54: Gewindespindel
- 55: Drehstrommotor
- 56: Lagerbock
- 57: Lagerbock
- 58: Anschlagpuffer
- 59: Schwenkeinheit, Schwenkscheibe
- 60: Arbeitseinheit, Schleifeinheit
- 61: Werkzeug, Schleifscheibe, Schleifwerkzeug
- 63: Hauptantriebsmotor
- 64: Schleifspindel
- 65: Arbeitsflächen, Schleifscheibenflanken
- 66: Drehachse
- 67: Schutzabdeckungen
- 68: Umfangsfläche
- 69: Schwenkachse

- 70: Abrichteinheit
- 72: Abrichtschlitten
- 73: Abrichtmotor
- 74: Abrichtrollen, Abrichtscheiben, Abrichtwerkzeuge
- 75: Abrichtspindel
- 76: Vorschubmotor
- 77: Schutzabdeckung
- 78: Abrichtrollen, Abrichtscheiben, Abrichtwerkzeuge
- 79: Abrichtmotor

- 80: Werkzeugständer
- 81: Linearführung
- 82: Führungsschienen

- 87: Antriebsmotor, Antriebssystemsteil
- 88: Gewindespindeltrieb, Antriebssystemsteil

- 90: Werkzeugeinheit
- 91: Hubschlitten
- 92: Schwenkkopf
- 93: Axialschlitten

- 95: Drehstrommotor
- 99: Schwenkeinheit, Schwenkscheibe

- 100: Arbeitseinheit, Schleifeinheit
- 101: Werkzeug, Schleifscheibe, Schleifwerkzeug
- 103: Hauptantriebsmotor
- 104: Schleifspindel
- 105: Arbeitsfläche

- 109: Schwenkachse

- 110: Abrichteinheit

- 114: Abrichtrolle, Abrichtwerkzeug, Abrichtscheibe

- 130: Werkstücktisch, Drehtisch
- 131: Einsenkung
- 132: T-Nuten

- 135: Werkstücktischachse

- 150: Werkstück, Stirnrad
- 151: Bohrung
- 152: Verzahnung, Schrägverzahnung
- 153: Zahnlücken
- 154: Zahnflanken

- 156: Wellenansätze
- 157: Lagersitze
- 158: Verzahnung

- 160: Werkstück-Spannvorrichtung
- 161: Werkstückhalter

## Patentansprüche

1. Verzahnungsschleifmaschine (1) für Außenverzahnungen mit einem drehbaren Werkstücktisch (130) und mit mindestens zwei Werkzeugständern (40, 80),
- wobei jeder Werkzeugständer (40, 80) in radialer Richtung zur Werkstücktischachse (135) verfahrbar ist,
- wobei an jedem Werkzeugständer (40, 80) eine zumindest annähernd parallel zur Werkstücktischachse (135) höhenverstellbare, der Werkstücktischachse (135) zugewandte Werkzeugeinheit (50, 90) angeordnet ist und
- wobei jede Werkzeugeinheit (50, 90) einen um eine Schwenkachse (69, 109) schwenkbaren Schwenkkopf (52, 92) umfasst, **dadurch gekennzeichnet,**
- **dass** jede Werkzeugeinheit (50, 90) einen Axialschlitten (53, 93) umfasst, der in einer Richtung zumindest annähernd normal zur Schwenkachse (69, 109) verfahrbar ist.

2. Verzahnungsschleifmaschine (1) nach Anspruch 1, **dadurch gekennzeichnet, dass** zumindest ein Axialschlitten (53; 93) einen Schwenkkopf (52; 92) trägt.

3. Verzahnungsschleifmaschine (1) nach Anspruch 1, **dadurch gekennzeichnet, dass** auf jedem Schwenkkopf (52, 92) eine Abrichteinheit (70, 110) angeordnet ist.

4. Verzahnungsschleifmaschine (1) nach Anspruch 3, **dadurch gekennzeichnet, dass** mindestens eine Abrichteinheit (70; 110) zwei rotierbare Abrichtrollen (74, 78) umfasst.

5. Verzahnungsschleifmaschine (1) nach Anspruch 1, **dadurch gekennzeichnet, dass** beide Werkzeugständer (40, 80) identisch aufgebaut sind.

6. Verzahnungsschleifmaschine (1) nach Anspruch 1, **dadurch gekennzeichnet, dass** beide Werkzeugeinheiten (50, 90) identisch sind.

7. Verzahnungsschleifmaschine (1) nach Anspruch 1, **dadurch gekennzeichnet, dass** der Werkstücktisch (130) und die Werkzeugständer (40, 80) jeweils auf einem eigenen Bettteil (11, 21, 31) angeordnet sind.

8. Verzahnungsschleifmaschine (1) nach Anspruch 1, **dadurch gekennzeichnet, dass** eine Werkzeugeinheit (50; 90) ein scheibenförmiges Werkzeug (61; 101) und die andere Werkzeugeinheit (90; 50) ein schneckenförmiges Werkzeug (101; 61) umfasst.
